# EUROPEAN PATENT SPECIFICATION

(11) **EP 2 408 253 B1**
(45) Date of publication and mention of the grant of the patent: **11.06.2014**
(21) Application number: 10305776.6
(22) Date of filing: 13.07.2010
(51) Int. Cl.: H04W 74/08

(54) **Method for random access to a wireless or mobile communication network, and corresponding transceiver equipment**
Verfahren für den Direktzugriff auf ein drahtloses oder mobiles Kommunikationsnetzwerk, und entsprechender Sender/Empfänger
Procédé pour l'accès aléatoire à un réseau de communication mobile ou sans fil et équipement d'émission/réception correspondant

(43) Date of publication of application: 18.01.2012
(73) Proprietor: Alcatel Lucent, 75007 Paris (FR)
(72) Inventor: Doetsch, Uwe, 74392, Freudental (DE); Ohm, Michael, 70372, Stuttgart (DE)
(74) Representative: Wetzel, Emmanuelle

(56) References cited:
- NORTEL NETWORKS: "On the signal structures of non-synchronized RACH", 3GPP DRAFT; R1-062758, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061003, 3 October 2006 (2006-10-03), XP050103246, [retrieved on 2006-10-03]
- LG ELECTRONICS: "Multi-TTI RACH Preamble Design", 3GPP DRAFT; R1-070905, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070206, 6 February 2007 (2007-02-06), XP050104915, [retrieved on 2007-02-06]
- ETRI: "Random Access Preamble Structure for Large Cell Size", 3GPP DRAFT; R1-071618(ETRI_RACH), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Julian; 20070403, 3 April 2007 (2007-04-03), XP050105545, [retrieved on 2007-04-03]

## Description

### BACKGROUND OF THE INVENTION

The present invention relates to the field of telecommunication, and more specifically to a method for performing a random access procedure by a transceiver equipment in a wireless or radio communication network.

In most wireless or mobile radio communication networks as GSM, UMTS, WIMAX or LTE a random access channel (RACH) is foreseen. The RACH is a contention-based channel for initial uplink transmission. When a transceiver equipment, so far not connected to the network, likes to start transmitting data towards the network, it first needs to access successfully the RACH channel. Contention resolution is the main goal of the access to the RACH since it may happen quite often that several transceiver equipments like to access the network simultaneously or quasi simultaneously leading to collisions. Once it is ensured that no collisions occurred, resources can be allocated to the transceiver equipment for future transmissions.

In addition to the access to the network, the RACH channel may have other functions as resource requests, transport of control information, time offset adjustment of the uplink transmission or transmitted power adjustment.

In Long Term Evolution (LTE) or LTE-Advanced networks based on OFDM modulation, both time and frequency synchronizations between the transceiver equipments and the base station need to be achieved. Especially, the random access procedure is used for obtaining fine uplink time synchronization between the base station and the transceiver equipment. Especially, a timing advance value can be communicated from the base station to the transceiver equipment. Using the timing advance value at the transceiver equipment compensates for the round trip delay in the cell.

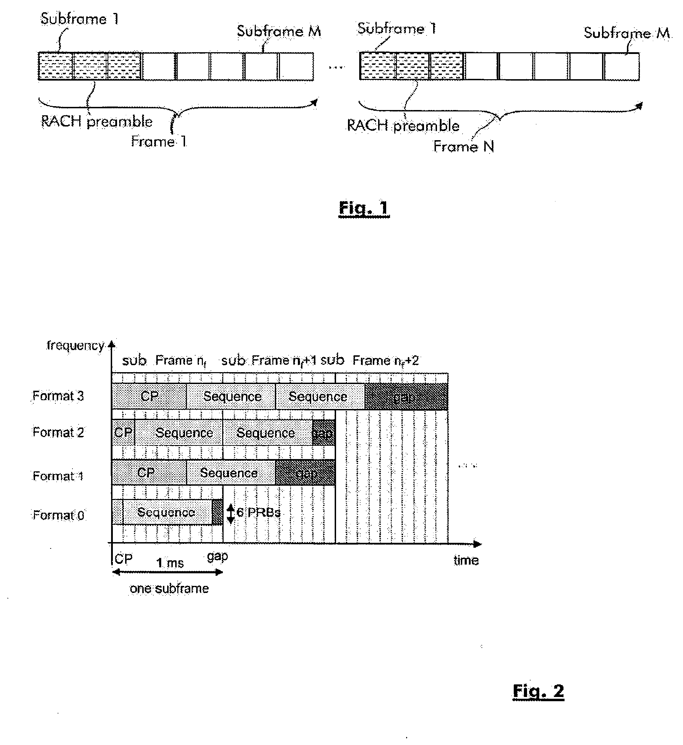

Figure 1 shows a frame structure as defined in a radio communication network. A frame is composed of subframes. A part of the subframes are used by the base station for searching for new transceivers accessing the RACH. For example, in LTE, each 10 ms the base station is searching for new RACH access during either 1, 2 or 3 ms being herein called the RACH window.

In LTE standardization, four different RACH formats as shown on figure 2 have been defined for FDD operation, and an additional one for TDD operation. For simplicity we restrict ourselves to the FDD case in the following description, as the TDD case is very similar. The RACH format definitions are to be found in Technical Specification 3GPP TS 36.211. All four RACH formats, comprise a cyclic prefix CP, one or two sequences and are followed by a gap.

The cyclic prefix CP is used to avoid the effect of interference caused by multipath propagation.

The sequence is used to identify each random access attempt. The sequence is usually selected randomly by the transceiver equipment among a predefined number of possibilities, for example 64. The transceiver equipment detects that the RACH procedure has been successful when it gets an answer from the base station comprising the same sequence(s) it initially used in the RACH preamble it sent. In some cases, two concatenated sequences are used to better cope with high interference situations.

A gap or guard interval is used in order to avoid interference with the next following sub-frame. The duration of the gap depends on the cell size and corresponds to the maximum round trip delay in the cell. Indeed a large cell size implies a long round trip delay between the downlink signal and the uplink transmission..

For example LTE foresees that RACH format 0 is adapted for a cell radius of 15 km and a 1 ms long RACH preamble is used while the LTE standard allows that RACH format 3 is used for a large cell radius of up to 100 km. The RACH format 3 extends on 3 ms duration over 3 OFDM sub frames.

A base station is configured to use one of the predefined RACH formats usually depending on its size. The RACH format to be used is part of the system information parameters broadcast by the base station in the downlink and received by the user equipments. The user equipments adapt the RACH format they use to the RACH format broadcast from the base station.

Consequently, during the duration of the RACH window no uplink traffic can be received by the base station on the transmission resources reserved for the RACH. The length of the RACH window influences the throughput of the network.

This presents the disadvantage that a part of the cell capacity is wasted by using large RACH messages in large cells with low user density but high capacity demand due to the long RACH format. RACH procedures for large cells are described in "Multi-TTI RACH Preamble design", LG Electronics, 3GPP TSG RAN WG1 Meeting 48, St. Louis, USA.

A particular object of the present invention is to provide for a solution in cases of large cells but with low user density.

Another object of the invention is to provide a CPE equipment adapted to support an optimized RACH procedure in case of large cells with low user density.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later. The scope the invention is defined by the appended independent claims.

These objects presented above, and others that appear below, are achieved in particular by a method for accessing a mobile or wireless radiocommunication network according to claim 1, and a transceiver equipment according to claim 8.

According to an example, if a RACH preamble sent by the transceiver equipment with a initial timing advance does not get a successful answer, a second RACH preamble is sent with a second timing advance, said second timing advance depending on the first timing advance and on the RACH search window duration of the base station, the RACH search window being deliberately configured smaller than the size foreseen in the communication standard for a cell of similar cell size than the considered cell the communication between the base station and the transceiver is taking place in. The RACH preamble size being as well deliberately configured smaller than the size foreseen in the communication standard in a cell of similar cell size than the considered cell than the considered cell the communication between the base station and the transceiver is taking place in.

This presents the advantage that short RACH sequences can be used in large cells while having the RACH procedure still working. This presents further the advantage that more capacity is available for uplink traffic from the transceiver equipment towards the base station since a shorter frame part is used for the RACH procedure compared to what is foreseen in the LTE standard.

This is especially advantageous in large cells with low user density but high capacity demand since a trade off between the network throughput and the interference level can be achieved.

In an embodiment, the initial timing advance value used for sending the first RACH preamble is calculated depending on the signal strength of the base station broadcast signal received by the transceiver equipment.

This presents the advantage that an indication can be gained to reduce the failure probability on the initial timing advance value, leading to a lower number of unsuccessful RACH procedure attempts.

In another embodiment, an indication related to the initial timing advance value is read out of a handover message received by the transceiver equipment.

In a still further embodiment, several RACH preambles with different timing advance values, the different timing advance values depending on the search window duration of the base station are sent during the same frame by the transceiver equipment.

This embodiment further presents the advantage that the RACH procedure can be completed during a single frame and result in a lower admission delay when a transceiver equipment accesses the network. In the previous embodiment, an unsuccessful RACH procedure in one frame would have resulted in a new RACH procedure attempt not before the next frame.

In a further embodiment of the invention, this method is used for air to ground LTE communication between on-board units of an air plane and base stations on the ground. Preferably, each air plane comprises one on-board unit further ensuring a gateway function with a plurality of user terminals on board of the plane. The communication between the on-board unit and the user terminals may be based on WIFI or on any other wireless standards.

In this type of application, the present invention present the advantage that the on-board units do not more need any GPS system for evaluating their position and consequently their distance to the base stations constituting the network for deriving the proper timing advance value.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a frame structure used for supporting the RACH procedure;
- Figure 2 shows different RACH preamble formats as defined in LTE standard;
- Figure 3a shows the reception of RACH preamble at a base station according to prior art;
- Figure 3b shows the reception of RACH preamble at a base station according to the present invention;
- Figure 4 shows an application of the present invention to air to ground communication;
- Figure 5 shows an implementation of a transceiver equipment according to the present invention.

### DETAILED DESCRIPTION OF THE INVENTION

Figure 1 and Figure 2 have already been described in connection with the background of the invention. In the following, the description will be made in the context of FDD operation. It will be understood by those skilled in the art that this is not a mandatory requirement of the present invention and that a similar approach can be used for TDD operation without departing from the scope of the present invention.

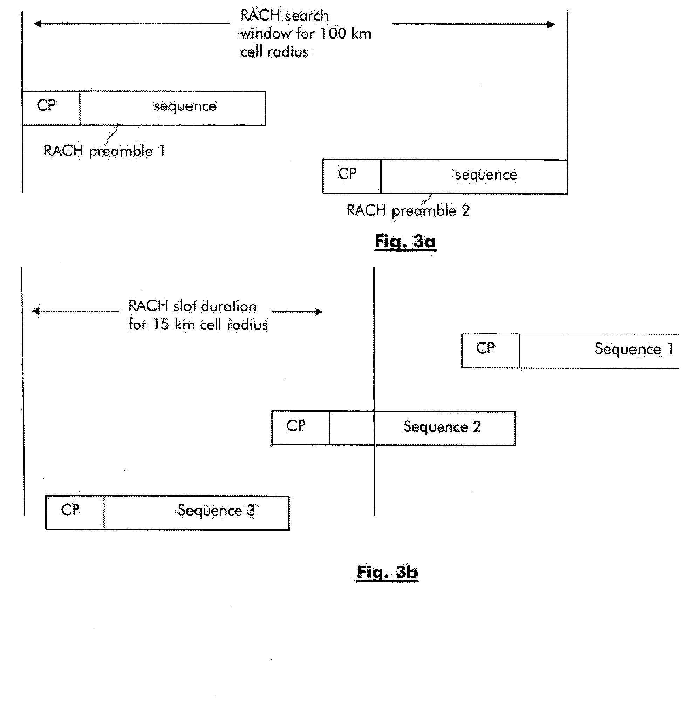

Figure 3a shows the reception of RACH preamble at a base station according to prior art. This configuration shows a RACH search window at a base station for 100 km cell radius. According to the LTE standard, for this cell size the RACH preamble should be 3 ms long.

A first RACH preamble 1 is received at the beginning of the RACH search window and corresponds to a RACH preamble sent by a transceiver equipment located next to the base station and which has a small round trip delay toward the base station. A second RACH preamble 2 is received at the end of the RACH search window and corresponds to a RACH preamble sent by a transceiver equipment located at the cell edge and which requires a larger round trip delay toward the base station. In prior art the RACH search window is configured to take the cell size into account. This implies that RACH preambles sent simultaneously by different transceiver regardless of their position in the cell will be detected in the same search window at the base station.

Figure 3b shows the reception of RACH preamble at a base station according to the present invention.

According to the present invention the size of the RACH window is reduced compared to the size which would be needed to capture all incoming RACH preamble regardless of the position of the emitting transceivers compared to the base station.

Consequently, even if a cell radius size of 100 km is available, the RACH search window size would be dimensioned as if the cell size would be much lower for example 15 km cell radius size. In this case, only RACH preambles sent by transceiver station located within a distance of 15 km around the base station would be correctly received in the search window of reduced size. This implies that frequently RACH preambles of transceiver equipments located far from the base station (for example located 15 km to 100 km away from the base station) would fall outside of the RACH search window and consequently will not be detected by the base station.

According to the present invention, this situation is solved by the fact that a new RACH preamble is issued by the transceiver terminal with a timing advance corresponding to a round trip delay in a cell having a much smaller cell radius (in this example 15 km) than in reality.

Consequently, this new attempt would be successful for transceiver equipments located 15 to 30 km away from the base station.

According to an example, if the second RACH preamble is still not correctly detected by the base station, a third RACH preamble is issued by the transceiver station with a timing advance equal to twice the round trip delay in a 15 km radius large cell. The third RACH preamble will be correctly received in case the transceiver equipment is located 30 to 45 km away from the base station.

It will be clear for the ones skilled in the art, that this method can be applied iteratively until the base station acknowledges the RACH preamble as correctly received.

The successive RACH preambles comprise a different sequence in order for the transceiver equipment to be able to identify upon which RACH preamble the base station has send an acknowledgement.

The interval between the transmissions of two different RACH preambles according to the present invention can be one frame. This however would lead in the worse case to a quite long time until the RACH preamble is properly received from the base station.

In a preferred embodiment of the present invention, a train of RACH preambles with different sequence numbers are sent successively separated in time by timing advance values corresponding to multiples of the round trip delay in a virtual cell of lower cell radius than the real cell. The probability that one of the RACH preambles is received in the next RACH search window at the base station is much higher and contribute not to loose any time for the RACH procedure. This embodiment would be specifically advantageous when using power ramping.

In a further advantageous embodiment of the present invention, a starting value for an initial timing advance value can be evaluated by the transceiver station based on broadcast signal it receives from the base station. Measuring the strength of the received signal and making an assumption on the signal strength transmitted by the base station would be a first indication on the distance between the transceiver equipment and the base station. The first RACH preamble could then be transmitted using a timing advance compatible with the estimation of the distance between the base station and the transceiver station.

This contributes also to lead to a quicker success of the RACH procedure.

In another example, an indication for an initial timing advance value can be contained in a handover message received at the transceiver station upon handover request from the network. Since the network already performs measurements on signal strength to make the handover decision, some of these measurements may be used to derive a distance between the next base station serving the transceiver equipment as well as an appropriate timing advance value to take this distance into account. In some radio communication systems, vendor specific fields are foreseen in the handover message. It would be advantageous to use one of the vendor specific fields to convey an indication related to the initial timing advance to the transceiver equipment.

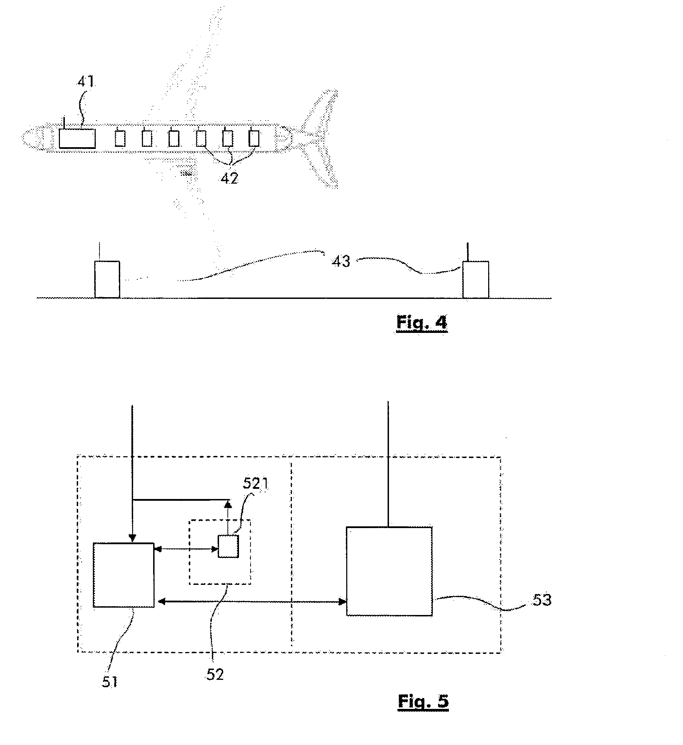

Figure 4 shows an application of the present invention to air to ground communication.

According to the present invention, this method is especially advantageous for air to ground communication systems in which a network of base stations 43 on the ground communicates with on-board units 41 in air planes.

The cell around each base station 43 is usually large due to the distance to cover.

However, each cell has a very low density of air planes.

In this situation one or a limited number of on-board units 41 per air plane is / are used as gateway or customer premises equipment (CPE) to further enable communication with user terminals 42 of the users on the plane. These user terminals 42 may be dedicated terminals communicating over WIFI with the on-board unit 41 or communicating with a usual mobile communication standard with the on-board unit 41, the on-board unit 41 converting the LTE signals it got in the wireless or mobile communication signal required for communication with the air users.

Figure 5 shows an implementation of a transceiver equipment according to the present invention. The transceiver comprises a receiving module 51 adapted to receive radio communication signal according to a radio communication standard as UMTS, GSM or LTE. LTE or any similar high data rate radiocommunication system is preferred for the large bit rate they can convey.

The transceiver further comprises a transmit module 52 comprising a RACH module 521 responsible for sending RACH preambles for accessing a mobile or wireless radiocommunication network. The RACH module 521 preferably uses short RACH sequences as for example RACH format 0 with α 1 ms duration as defined in the LTE standard although the corresponding base station is in the middle of a large cell up to 100 km or more cell radius which would according to LTE standard require a RACH format 3 with a 3 ms duration.

The RACH module 521 further comprises means for selecting an initial timing advance value for issuing the first RACH preamble as well as means for calculating incremental timing advance values for sending subsequent RACH preambles. The incremental timing advance values are preferably related to the gap duration following the RACH preamble. The gap duration following the RACH preamble is preferably further related to the size of the search window used by the base station with which the transceiver is communicating. For example, a 903 µs RACH preamble followed by a 7 µs gap corresponds to α 1 ms search window at the base station side.

The RACH module 521 comprises means for sending a RACH preamble using the initial timing advance value or the incremental timing advance value. The means for sending a RACH preamble further selects a sequence to be included in the RACH preamble preferably randomly selected among a set of predefined sequences as foreseen in LTE standard.

The RACH module 521 further comprises means for checking if an acknowledgement of the RACH preamble has been received from the base station in order to determine if additional RACH preambles have to be sent or if the sending of additional RACH preambles can be stopped.

In a preferred embodiment of the present invention, the RACH module 521 comprises means for generating a train of RACH preambles with different sequence number and sent with different timing advance values all related to the gap in the RACH preamble. The train of RACH preamble is sent during the same frame.

In a further embodiment of the present invention, the receiving module 51 comprises means for detecting the signal strength of a broadcast signal emitted by a base station. The information related to the signal strength is transmitted from the receiving module 51 to the RACH module 521 which evaluates the distance between the transceiver and the base station based on an assumption on the broadcast signal strength as emitted by the base station. Based on the evaluated distance information, an appropriate timing advance value can be selected which increases the probability to have a successful RACH procedure at one of the first sent RACH preambles.

It will be understood by those skilled in the art that even if the distance and an appropriate timing advance value are linked, the estimation of the distance is not a mandatory requirement. A direct evaluation of the appropriate timing advance value or of another intermediate parameter related to the timing advance value could be evaluated by the RACH module.

In a preferred embodiment, the transceiver is an on-board unit part of a plane and acts as a CPE responsible for aggregating the data flows of hundreds of users on board of a plane (up to 800 passengers for an A380 Airbus airplane). The users on-board communicating are preferably using a wireless communication scheme as WIFI or GSM or UMTS or any other appropriate wired communication with an on-board communication controller 53. The on board communication controller 53 further comprises a gateway function aggregating/ disaggregating on-board data and for converting the on-board used communication scheme to the air to ground used communication scheme and vice versa.

Either one or a limited number of such on-board units would be available per airplane.

It will be understood that not only planes could carry an on-board unit implementing the features of a transceiver but any other moving vehicle gathering several terminals on-board could be adapted to carry an on-board unit according to he present invention.

Alternatively, it will however be understood by those skilled in the art that the described transceiver could also be a simple user equipment.

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any boxes shown in the Figures are conceptual only. Their function may be carried out through the operation of program logic, through dedicated logic, through the interaction of program control and dedicated logic, or even manually, the particular technique being selectable by the implementer as more specifically understood from the context.

## Claims

1. Method for accessing a mobile or wireless radio communication network by a transceiver equipment, said transceiver equipment sending a RACH preamble over a Random Access Channel to a base station, said base station **characterized by** using a search window for detecting said RACH preamble, wherein said search window at said base station has a duration smaller than the time needed for the round-trip delay from said transceiver equipment to said base station plus the RACH preamble duration, said method comprising the steps of:
* Sending from said transceiver equipment to said base station a first RACH preamble with a first sequence using an initial timing advance value;
sending from said transceiver equipment at least a second RACH preamble with a second sequence with a second timing advance value different from said initial timing advance, said second timing advance being related to said initial timing advance and to the search window duration.

2. Method according to claim 1, wherein the strength of a downlink synchronization signal received from said base station by said transceiver equipment is used for evaluating said initial timing advance value.

3. Method according to claim 1, wherein an indication on said initial timing advance value is read out of a handover message received at the transceiver equipment.

4. Method according to claim 1, wherein said first RACH preamble is sent in a first frame and said second RACH preamble is sent in a subsequent frame.

5. Method according to claim 1, wherein said second RACH preamble is sent in the same frame as said first RACH preamble using a different timing advance value compared to said first sent RACH preamble, said timing advance value being related to said initial timing advance and to the search window duration of said base station.

6. Method according to claim 1, said method being adapted to be used for air to ground communications wherein said transceiver equipment is an on-board unit on board of an air plane and said base station is a ground unit.

7. Method according to claim 1, said method being adapted to be used in large cells having a low user density.

8. Transceiver equipment adapted to be used in a mobile or wireless communication network, said transceiver equipment **characterized by** being adapted to access A to a base station of said network over a RACHwherein a search window at said base station has a duration smaller than the time needed for the round-trip delay from said transceiver equipment to said base station plus the RACH preamble duration, said transceiver equipment comprising:
Means for sending to a base station a first RACH preamble with a first sequence using an initial timing advance value.
Means for sending at least a second RACH preamble with a second timing advance different from said initial timing advance value, said second timing advance being related to said RACH duration and to said initial timing advance value.

9. Transceiver equipment according to claim 8, being a customer premises equipment.

10. Transceiver equipment according to claim 8, being an on board unit in an air plane, said on board unit acting as a gateway for further traffic distribution to user equipments on board of said air plane.

## Patentansprüche

1. Verfahren für den Zugriff auf ein mobiles oder drahtloses Funkkommunikationsnetzwerk durch eine Sende-Empfangs-Einrichtung, wobei die besagte Sende-Empfangs-Einrichtung eine RACH-Präambel über einen Direktzugriffskanal an eine Basisstation sendet, wobei die besagte Basisstation durch das Verwenden eines Suchfensters zur Erfassung der besagten RACH-Präambel gekennzeichnet ist, wobei die Dauer des besagten Suchfensters an der besagten Basisstation kürzer ist als die für die Round-Trip-Laufzeit von der besagten Sende-Empfangs-Einrichtung zu der besagten Basisstation benötigte Zeit plus die RACH-Präambeidauer, wobei das besagte Verfahren die folgenden Schritte umfasst:
- Senden, durch die besagte Sende-Empfangseinrichtung, einer ersten RACH-Präambel mit einer ersten Sequenz unter Verwendung eines ursprünglichen Vorauseilzeit-Wertes an die besagte Basisstation;
- Senden, durch die besagte Sende-Empfangs-Einrichtung, mindestens einer zweiten RACH-Präambel mit einer zweiten Sequenz mit einem zweiten Vorauseilzeit-Wert, welcher sich von der besagten ursprünglichen Vorauseilzeit unterscheidet, wobei sich die besagte zweite Vorauseilzeit auf die besagte ursprüngliche Vorauseilzeit und auf die Suchfensterdauer bezieht.

2. Verfahren nach Anspruch 1, wobei die Stärke eines von der besagten Basisstation an der besagten Sende-Empfangs-Einrichtung empfangenen Downlink-Synchronisationssignals für die Bewertung des besagten ursprünglichen Vorauseilzeit-Wertes verwendet wird.

3. Verfahren nach Anspruch 1, wobei eine Angabe zu dem besagten ursprünglichen Vorauseibeit-Wert aus einer an der Sende-Empfangs-Einrichtung empfangenen Handover-Nachricht ausgelesen wird.

4. Verfahren nach Anspruch 1, wobei die besagte erste RACH-Präambel in einem ersten Rahmen gesendet wird und die besagte zweite RACH-Präambel in einem darauffolgenden Rahmen gesendet wird.

5. Verfahren nach Anspruch 1, wobei die besagte zweite RACH-Präambel in demselben Rahmen wie die erste RACH-Präambel unter Verwendung eines im Vergleich zu der besagten ersten gesendeten RACH-Präambel unterschiedlichen Vorauseilzeit-Wertes gesendet wird, wobei sich der besagte Vorauseilzeit-Wert auf die ursprüngliche Vorauseilzeit und auf die Suchfensterdauer der besagten Basisstation bezieht.

6. Verfahren nach Anspruch 1, wobei das besagte Verfahren für die Verwendung für Luft-zu-Boden-Kommunikationen geeignet ist, wobei die besagte Sende-Empfangs-Einrichtung eine On-Board-Einheit an Bord eines Flugzeugs ist und die besagte Basisstation eine Bodeneinheit ist.

7. Verfahren nach Anspruch 1, wobei das besagte Verfahren für die Verwendung in großen Zellen mit niedriger Nutzerdichte geeignet ist.

8. Sende-Empfangs-Einrichtung, ausgelegt für die Verwendung in einem mobilen oder drahtlosen Kommunikationsnetzwerk, wobei die besagte Sende-Empfangs-Einrichtung **dadurch gekennzeichnet ist, dass** sie für den Zugriff auf eine Basisstation des besagten Netzwerks über einen RACH geeignet ist, wobei die Dauer eines Suchfensters an der besagten Basisstation kürzer ist als die für die Round-Trip-Laufzeit von der besagten Sende-Empfangs-Einrichtung zu der besagten Basisstation benötigte Zeit plus die RACH-Präambeldauer, wobei die besagte Sende-Empfangs-Einrichtung umfasst:
- Mittel zum Senden einer ersten RACH-Präambel mit einer ersten Sequenz unter Verwendung eines ursprünglichen Vorauseilzeit-Wertes an die besagte Basisstation;
- Mittel zum Senden mindestens einer zweiten RACH-Präambel mit einer zweiten Vorauseilzeit, welche sich von dem besagten ursprünglichen Vorauseilzeit-Wert unterscheidet, wobei sich die besagte zweite Vorauseilzeit auf die besagte RACH-Dauer und auf den besagten ursprünglichen Vorauseilzeit-Wert bezieht.

9. Sende-Empfangs-Einrichtung nach Anspruch 8, wobei die besagte Sende-Empfangs-Einrichtung ein Teilnehmergerät in Kunden-Räumlichkeiten ist.

10. Sende-Empfangs-Einrichtung nach Anspruch 8, wobei die besagte Sende-Empfangs-Einrichtung eine On-Board-Einheit in einem Flugzeug ist, wobei die besagte On-Board-Einheit als ein Gateway für die weitere Verkehrsverteilung an Teilnehmergeräte an Bord des besagten Flugzeugs ist.

## Revendications

1. Procédé pour accéder à un réseau de radiocommunication mobile ou sans fil au moyen d'un équipement émetteur-récepteur, ledit équipement émetteur-récepteur envoyant un préambule RACH sur un canal d'accès aléatoire à une station de base, ladite station de base étant **caractérisée par** l'utilisation d'une fenêtre de recherche pour détecter ledit préambule RACH, dans lequel ladite fenêtre de recherche au niveau de ladite station de base a une durée inférieure au temps nécessaire pour le temps de transmission aller-retour entre ledit équipement émetteur-récepteur et ladite station de base plus la durée du préambule RACH, ledit procédé comprenant les étapes suivantes:
- Envoyer à partir dudit équipement émetteur-récepteur vers ladite station de base un premier préambule RACH avec une première séquence en utilisant une valeur initiale d'avance de synchronisation ;
- envoyer à partir dudit équipement émetteur-récepteur au moins un deuxième préambule RACH avec une deuxième séquence avec une deuxième valeur d'avance de synchronisation différente de ladite avance initiale de synchronisation, ladite deuxième avance de synchronisation étant liée à ladite avance initiale de synchronisation et à la durée de la fenêtre de recherche.

2. Procédé selon la revendication 1, dans lequel l'intensité d'un signal de synchronisation de liaison descendante provenant de ladite station de base par ledit équipement émetteur-récepteur est utilisée pour évaluer ladite valeur initiale d'avance de synchronisation.

3. Procédé selon la revendication 1, dans lequel une indication sur ladite valeur initiale d'avance de synchronisation est lue à partir d'un message de transfert reçu au niveau de l'équipement émetteur-récepteur.

4. Procédé selon la revendication 1, dans lequel ledit premier préambule RACH est envoyé dans une première trame et ledit deuxième préambule RACH est envoyé dans une trame suivante.

5. Procédé selon la revendication 1, dans lequel ledit deuxième préambule RACH est envoyé dans la même trame que ledit premier préambule RACH en utilisant une valeur d'avance de synchronisation différente par rapport audit premier préambule RACH envoyé, ladite valeur d'avance de synchronisation étant liée à ladite avance initiale de synchronisation et à la durée de la fenêtre de recherche de ladite station de base.

6. Procédé selon la revendication 1, ledit procédé étant adapté pour être utilisé pour les communications air-sol dans lequel ledit équipement émetteur-récepteur est une unité embarquée à bord d'un avion et ladite station de base est une unité au sol.

7. Procédé selon la revendication 1, ledit procédé étant adapté pour être utilisé dans de grandes cellules ayant une faible densité d'utilisateurs.

8. Équipement émetteur-récepteur adapté pour être utilisé dans un réseau de communication mobile ou sans fil, ledit équipement émetteur-récepteur étant **caractérisé en ce qu'**il est adapté pour accéder à une station de base dudit réseau sur un RACH dans lequel une fenêtre de recherche au niveau de ladite station de base a une durée inférieure au temps nécessaire pour le temps de transmission aller-retour entre ledit équipement émetteur-récepteur et ladite station de base plus la durée du préambule RACH, ledit équipement émetteur-récepteur comprenant :
des moyens pour envoyer à une station de base un premier préambule RACH avec une première séquence en utilisant une valeur initiale d'avance de synchronisation ;
des moyens pour envoyer au moins un deuxième préambule RACH avec une deuxième avance de synchronisation différente de ladite valeur initiale d'avance de synchronisation, ladite deuxième avance de synchronisation étant liée à ladite durée RACH et à ladite valeur initiale d'avance de synchronisation.

9. Équipement émetteur-récepteur selon la revendication 8, étant un équipement des locaux d'abonné.

10. Équipement émetteur-récepteur selon la revendication 8, étant une unité embarquée dans un avion, ladite unité embarquée agissant comme une passerelle pour une distribution de trafic ultérieure vers des équipements utilisateur à bord dudit avion.
